# EUROPÄISCHE PATENTANMELDUNG

(11) **EP 2 362 275 A1**
(43) Veröffentlichungstag der Anmeldung: **31.08.2011**
(21) Anmeldenummer: 11001219.2
(22) Anmeldetag: 15.02.2011
(51) Int. Cl.: G03H 1/00

(54) **Sicherheitselement mit Volumenhologramm**

(30) Priorität: 22.02.2010 DE 102010008874
(71) Anmelder: Giesecke & Devrient GmbH, 81677 München (DE)
(72) Erfinder: Kaule, Wittich, Dr., 82275 Emmering (DE)

(57) **Zusammenfassung**

Die Erfindung betrifft ein Sicherheitselement zur Erhöhung des Fälschungsschutzes von Sicherheitsdokumenten, wie Banknoten, Wertpapieren, Ausweisen, Kreditkarten, Debit-Karten oder dergleichen, wobei das Sicherheitselement aus einem Volumenhologramm in einer belichtbaren Schicht besteht, wobei die Dicke der belichtbaren Schicht mindestens eine Wellenlänge der belichtenden bzw. auslesenden elektromagnetischen Strahlung beträgt und wobei in dem Volumenhologramm eine Information in Form mindestens eines Musters, mindestens eines alphanumerischen Zeichens oder einer graphischen Abbildung abgespeichert ist.

Erfindungsgemäß ist die belichtbare Schicht in mindestens einem ersten Teilbereich mindestens teiltransparent und weist keinen dunklen Hintergrund auf, so dass die in dem Volumenhologramm abgespeicherte Information für einen Betrachter erst erkennbar wird, wenn der Betrachter das Volumenhologramm vor einen dunklen Hintergrund hält.

## Beschreibung

Die Erfindung betrifft ein Sicherheitselement zur Erhöhung des Fälschungsschutzes von Sicherheitsdokumenten, wie Banknoten, Wertpapieren, Ausweisen, Kreditkarten, Debit-Karten oder dergleichen, wobei das Sicherheitselement aus einem Volumenhologramm in einer belichtbaren Schicht besteht, wobei die Dicke der belichtbaren Schicht mindestens eine Wellenlänge der belichtenden bzw. auslesenden elektromagnetischen Strahlung beträgt und wobei in dem Volumenhologramm eine Information in Form mindestens eines Musters, mindestens eines alphanumerischen Zeichens oder einer graphischen Abbildung abgespeichert ist.

Zum Schutz gegen Nachahmung, insbesondere mit Farbkopierern oder anderen Reproduktionsverfahren, werden Datenträger, wie beispielsweise Banknoten oder Karten, mit optisch variablen Sicherheitselementen ausgestattet. Der Fälschungsschutz beruht dabei darauf, dass der visuell und einfach und deutlich erkennbare optisch variable Effekt von den oben genannten Reproduktionsgeräten nicht oder nur ungenügend wiedergegeben wird.

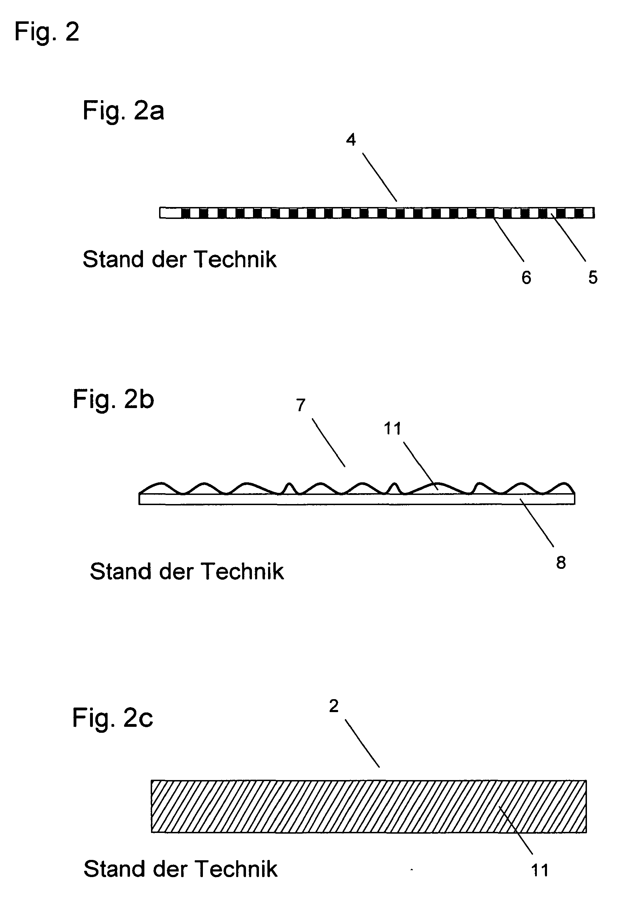

Hologramme und hologrammartige Gitterbilder als optisch variable Sicherheitselemente bei Banknoten, insbesondere auch bei Fenster-Banknoten, sind aus dem Stand der Technik bekannt. Diese Hologramme und hologrammartigen Gitterbilder können vorliegen als Hell-Dunkel-Transmissionshologramm bzw. Hell-Dunkel-Transmissionsgitter (siehe Fig. 2a), Oberflächenstruktur-Hologramm bzw. Oberflächenstruktur-Gitter (siehe Fig. 2b) oder Volumenhologramm bzw. Bragg-Gitter (siehe Fig. 2c).

Ein Hell-Dunkel-Transmissionshologramm bzw. Hell-Dunkel-Transmissionsgitter wird bekanntlich durch Belichtung eines Silberhalogenid-Films hergestellt. Die holographische Schicht ist dünner als die Lichtwellenlänge und enthält gitterartig nebeneinanderliegende hellere und dunklere Bereiche.

Ein Oberflächenstruktur-Hologramm bzw. Oberflächenstruktur-Gitter wird bekanntlich durch Belichtung einer Photoresistschicht hergestellt, wobei die Belichtung mittels elektromagnetischer Strahlung oder mit Elektronenstrahlen erfolgt. Die Tiefe der erzeugten Strukturen ist geringer als die Lichtwellenlänge, die Berg-Tal-Strukturen haben die Größenordnung der Lichtwellenlänge. Die strukturierte Oberfläche wird verspiegelt, wenn das Hologramm oder Gitterbild in Reflexion angewandt werden soll.

Ein Volumenhologramm bzw. Bragg-Gitter wird bekanntlich durch Belichtung einer Photopolymerschicht hergestellt. Die holographische Schicht ist mehrfach so dick wie die Lichtwellenlänge. In der holographischen Schicht entsteht durch Belichtung und Fixierung eine Abfolge von schräg liegenden Schichtbereichen unterschiedlicher Brechzahl.

Ein verspiegeltes Oberflächenhologramm, wie allgemein üblich als Banknoten-Sicherheitsmerkmal, wirkt hell und freundlich. Ein Volumenhologramm, wie neuerdings als Banknoten-Sicherheitsmerkmal diskutiert, benötigt jedoch einen dunklen Hintergrund, um für den Betrachter erkennbar zu werden. Ein solches dunkles Element wirkt im Allgemeinen ästhetisch störend im Design einer Banknote.

Aus WO 2006/018171 A2 ist ein Sicherheitselement zur Absicherung von Sicherheitspapieren, Wertdokumenten und dergleichen mit einem mindestens teiltransparenten Träger bekannt, der mit einem Echtheitskennzeichen in Form einer Schicht aus flüssigkristallinem Material, insbesondere aus cholesterischem flüssigkristallinem Material, versehen ist. Das Echtheitskennzeichen vermittelt hierbei in Durchlicht einen ersten optischen Eindruck und im Auflicht vor einem dunklen Hintergrund einen zweiten optischen Eindruck, der sich von dem ersten optischen Eindruck signifikant unterscheidet.

Der Erfindung liegt deshalb die Aufgabe zugrunde, ein gattungsgemäßes Sicherheitselement derart weiterzubilden, dass die Nachteile des Standes der Technik behoben, der Schutz gegenüber Fälschungen weiter erhöht sowie die Erkennbarkeit von Fälschungen verbessert wird.

Diese Aufgabe wird durch die Merkmale der unabhängigen Ansprüche gelöst. Weiterbildungen der Erfindung sind Gegenstand der abhängigen Ansprüche.

Erfindungsgemäß ist die belichtbare Schicht in mindestens einem ersten Teilbereich mindestens teiltransparent und weist keinen dunklen Hintergrund auf, so dass die in dem Volumenhologramm abgespeicherte Information für einen Betrachter erst erkennbar wird, wenn der Betrachter das Volumenhologramm vor einen dunklen Hintergrund hält. Ein derartiger dunkler Hintergrund ist beispielsweise ein lichtabsorbierender Hintergrund oder eine Fläche, die wenig oder kein Licht in Richtung des Volumenhologramms reflektiert.

Besonders vorteilhaft wird dabei das Volumenhologramm ohne dunklen Hintergrund im Fenster einer sogenannten Fenster-Banknote untergebracht. Bei einer sogenannten Fenster-Banknote befindet sich in dem Substrat der Banknote mindestens ein Fenster in Form eines transparenten Teilbereichs oder einer durchgehenden Öffnung. Erkennbar wird hierbei die in dem Volumenhologramm abgespeicherte Information erst, wenn der Betrachter die Banknote mit dem Fenster vor einen dunklen Hintergrund hält.

Vorzugsweise werden weitere Elemente im Fenster untergebracht, die auch ohne Hintergrund erkennbar sind, damit das Fenster bei normaler Betrachtung nicht völlig leer erscheint.

Transluzenz im Sinne dieser Erfindung bedeutet, dass ein Objekt auftreffendes Licht in einem bestimmten Anteil hindurchtreten lässt. Trifft Licht auf eine Seite des Objekts auf, wird ein bestimmter Anteil des Lichtes bis zu der anderen Seite des Objekts hindurchgelassen und tritt dort wieder aus. Je größer der prozentuale Anteil des hindurchtretenden Lichtes bezogen auf das auftreffende Licht ist, desto transluzenter ist das Objekt. Liegt der prozentuale Anteil bei mindestens 90 %, d.h. lässt das Objekt das auftreffende Licht wie bei einem Fenster nahezu ungeschwächt hindurchtreten, wird das Objekt als transparent bezeichnet. Ein Objekt, das zwischen 90 % und 20 % des auftreffenden Lichtes hindurchtreten lässt, wird als teiltransparent bezeichnet. Ein Objekt hingegen, das weniger als 20 %, bevorzugt unter 10 % und besonders bevorzugt etwa 0 % des auftreffenden Lichtes hindurchtreten lässt, d.h. bei dem der Anteil des hindurchtretenden Lichtes bezogen auf das auftreffende Licht gering oder nahe oder gleich Null ist, wird als opak oder als nicht lichtdurchlässig bezeichnet.

Bei Massenvervielfältigung des erfindungsgemäßen Volumenhologramms wird nach derzeitigem Stand der Technik insbesondere optisches Kopieren angewendet, wobei beispielsweise ein verspiegeltes Oberflächen-Hologramm als "Hologramm-Master" dient. Bevorzugte Herstellungsverfahren sind hierbei die Step-and-Repeat-Flächenbelichtung und die Scan-Belichtung.

Eine transluzente, bevorzugt transparente Photopolymerfolie, in die das Volumenhologramm einbelichtet werden soll, wird in Kontakt mit dem spiegelnden Hologramm-Master gebracht. Die Belichtung mit Laserlicht erfolgt durch die Photopolymerfolie hindurch. Das einfallende Licht interferiert in der Folie mit dem vom Hologramm-Master reflektierten Licht und erzeugt in der Photopolymerfolie ein Volumenhologramm.

Der Hologramm-Master ist hierbei beispielsweise ein als verspiegeltes Relief vorliegendes:
- echtes Hologramm, das als Abbild eines realen Objekts hergestellt wurde, oder holographisches Stereogramm, entstanden aus einer holographisch überlagerten Bilderserie, die beispielsweise aus Graham Saxby "Practical Holography", 1988 (ISBN 0-13-693797-7) oder Graham Saxby "Practical Holography", 3. Aufl. 2003 (ISBN 0-7503-0912-1) bekannt sind, oder
- Dot-Matrix-Gitterbild, Mattstruktur-Gitterbild oder computergeneriertes Hologramm oder
- hologrammartiges Gitterbild, wie es beispielsweise in EP 1676157 beschrieben ist, oder bewegtes Gitterbild beispielsweise in Form einer sogenannten "Interlaced" oder "Moving Contour", wie es beispielsweise in EP 1676157 beschrieben ist, oder
- Kinegramm oder Exelgramm.

Anstatt als verspiegeltes Relief kann der Hologramm-Master auch als Transmissionshologramm vorliegen.

Anstelle eines Hologramms kann als Master auch eine Anordnung bzw. ein Array aus Mikrospiegeln oder Mikroprismen verwendet werden, wie sie beispielsweise aus PCT/ EP2010/ 007368, DE 10 2010 049 831 oder DE 10 2010 049 832 bekannt sind, deren Merkmale diesbezüglich vollumfänglich in den Schutzumfang dieser Anmeldung mit aufgenommen werden. Ebenso können anstelle des Hologramms auch Master in Form von Bildern verwendet werden, die aus Mikrospiegeln oder Mikroprismen aufgebaut sind.

Bevorzugt wird ein statisches oder bewegtes computererzeugtes holographisches Stereogramm als Hologramm-Master für Volumenhologramme als Sicherheitselement verwendet. Hierbei wird eine computergenerierte oder computerbearbeitete Bildfolge mit DLP (= Digital Light Processor, z.B. LCD-Array, Mikrospiegel-Array) als Multiplex-Hologramm belichtet. Die Bildfolge stellt Ansichten aus unterschiedlichen Richtungen eines statischen oder bewegten Objekts dar.

Das Multiplex-Hologramm wird als Transmissionshologramm erzeugt, welches als Masterhologramm dient bei der holographischen Vervielfältigung von Volumenhologrammen.

Das DLP-Origination-Verfahren ist beispielsweise bekannt aus T. Honda et al. "Printing of holographic stereogram using liquid crystal TV", Proc. SPIE Vol. 1051, p. 186 (Practical Holographie, 17-18 Jan.1989) oder aus Takashi Wada (Dai Nippon Printing) "Application of Computergraphics-Image Hologram for Anticounterfeiting Labels", Proc. SPIE Vol.1210, p.42 (1990), (Jan.1990-Symposium Optical Security and Anticounterfeiting Systems, W.F. Fagan ed.).

In einem beispielhaften Ablauf zur Erzeugung und Aufbringung von Volumenhologrammen auf Banknoten, der vorteilhaft auch bei dem erfindungsgemäßen Volumenhologramm im Banknotenfenster angewandt werden kann, wird zunächst ein Bild eines abzubildenden Objekts erzeugt. Hierbei wird entweder das Bild mittels 3D-Computergrafik erzeugt, wobei eine Auswahl von verschiedenen Ansichten erfolgt, oder mittels einer Digitalkamera eine Serie von Bildern des Objekts aufgenommen und einer Computer-Bearbeitung zugeführt. Anschließend wird mit einem LCD- oder Spiegel-Array eine holographische Multiplexaufnahme und damit ein Transmissions-Master erzeugt. Die holographische Kopie wird auf Photopolymer-Rollenmaterial übertragen, indem dieses als Volumenhologramm mittels Scan-Belichtung oder Step-and-Repeat-Verfahren belichtet wird. In einem folgenden Arbeitsschritt wird das Photopolymer-Rollenmaterial aufgequollen. Wichtig für die Massenfertigung von Volumenhologrammen ist dabei, dass bei den derzeit verwendeten Photopolymeren nach dem Aufquellen eine trockene Fixierung durch Nachbelichtung mit UV erfolgt. Sofern erforderlich oder gewünscht, wird der Photopolymer mit einer Schutz- und/oder Kleberschicht versehen und auf die gewünschten Maße geschnitten. Das Substrat, auf das der Photopolymer aufgebracht werden soll, wird bevorzugt, beispielsweise mittels eines Primers, vorbereitet. Abschließend wird der Photopolymer auf das Substrat aufgebracht, bevorzugt durch Heißkleben oder UV-Kleben.

Volumenhologramme werden vorteilhaft in den folgenden Verfahren bzw. Varianten hergestellt:
- 3D-Hologramm von dreidimensionalem Objekt zur Betrachtung bei Weißlicht: bei einem Volumenhologramm entsteht hierbei ein monochromes Hologramm im Gegensatz zu einem Regenbogenhologramm bei einem Oberflächenhologramm. Dabei kann das 3D-Objekt entweder hinter der Substratebene oder vor der Substratebene erscheinen oder die Substratebene durchdringen; oder
- 3-dimensional wirkendes Hologramm von 2-dimensionalem Objekt zur Betrachtung bei Weißlicht: Dabei kann das 2D-Objekt entweder hinter der Substratebene oder vor der Substratebene erscheinen oder in der Substratebene liegen; oder
- Mattstruktur-Gitterbild (monochrom, achromatisch, mehrfarbig), oder
- holographische Maskierung (Fensterfunktion, Schattenriss, Schwarz-Weiß-Funktion) oder holographierter Modulator (Graustufen-Funktion), wobei die Maske oder der Modulator ein Positiv- oder Negativ-Bild (z.B. Positiv- oder Negativ-Schriftbild, Logo) oder ein Transmission-LCD-Array oder "reflection type controllable display device" (z.B. ansteuerbares Spiegelarray) ist; oder
- Kulissenbild, d.h. mehrere holographische Masken hintereinander, oder
- Abdeckmaske oder Modulator zur Abdeckung von Hologramm-Bildteilen, wobei die Abdeckmaske eine statische Abdeckmaske im Master oder im Kopierverfahren oder eine veränderbare Maske oder ein Modulator in Form eines Transmission-LCD-Array oder "reflection type controllable display device" (z.B. ansteuerbares Spiegelarray) ist; oder
- dreidimensionales holographisches Stereogramm von einer Bilderserie (früher Diapositive heute Digitalbilder) oder
- Hologramm nicht von einem realen Objekt, sondern von einem bereits vorliegendem Hologramm (=holographische Kopie eines Hologramms), und hierbei Volumenhologramm von einem Volumenhologramm, Volumenhologramm von einem Oberflächenhologramm, Volumenhologramm von einem Gitterbild (z.B. E-Beam-Gitterbild) oder Volumenhologramm von einem computererzeugten Hologramm;
- Dot-Matrix-Bild, erzeugt durch Laserpunkt-Scan-Belichtung oder mit flächiger Belichtung und Laserpunkt-Scan-Fixierung oder Laserpunkt-Scan-Löschung zum Einbringen von Bildinformation oder
- Wechselbild, bei dem zwei oder mehr Motive beim Verkippen des Bildes wechseln, wobei das Wechselbild holographisch aus zwei oder mehr Richtungen belichtet oder als Gitterbild konstruiert ist. Das Wechselbild kann auch als Bewegungsbild, wobei Bewegungszustände einer Szenerie wechseln, oder als Morphing-Bild, wobei Bilder ineinander übergehen, ausgeführt sein; oder
- Mehrfarbenbild oder
- Echtfarbenhologramm als Sandwich aus einzelnen RGB-Auszug-Hologrammen oder als RGB-Belichtung in panchromatisches Material oder
- holograpisches optisches Element, diffraktives optisches Element oder computergeneriertes Hologramm oder
- Kinegramm oder Exelgramm.

Diese Verfahren bzw. Varianten können sowohl als Oberflächenhologramme wie als Volumenhologramme als Sicherheitselemente bei Dokumenten und Produkten, wie z.B. Banknoten, angewandt werden. Insbesondere können diese Verfahren bzw. Varianten bei den erfindungsgemäßen Volumenhologrammen im Banknotenfenster angewandt werden.

Farbige Volumenhologramme können als Echtfarben-Hologramm oder im Pseudo-Color-Verfahren ausgeführt werden. Echtfarben-Volumenhologramme haben eine sehr realistische Wirkung. Die Herstellung ist entsprechend aufwendig, wobei drei verschiedenfarbige Laser für drei Farbauszüge für Rot, Grün und Blau eingesetzt werden. Einfacher herzustellen und für Vervielfältigung geeignet sind Pseudo-Color-Volumenhologramme. Dabei wird von der Eigenschaft der Volumenhologramme Gebrauch gemacht, dass sich die Farbe des Hologramms ändert, wenn das Material in der Dicke geschrumpft oder gequollen wird.

Das Quellen wird bevorzugt gezielt eingeleitet durch Aufbringen einer geeigneten Substanz, die in die Hologrammschicht eindiffundiert, das Quellen wird gestoppt durch Belichtung. Die Quellsubstanz kann vollflächig oder lokal aufgebracht werden. Das Stoppen kann in unterschiedlichen Bereichen eher oder später erfolgen, durch Maskierung der Belichtung oder durch Scan-Belichtung. Damit können Hologramme in beliebigen Farben erzeugt werden, sowohl einfarbige als auch Hologramme, die viele Farben enthalten.

Die erfindungsgemäßen Volumenhologramme können mit anderen Merkmalen kombiniert werden. Dies sind besonders bevorzugt beispielsweise Oberflächenhologramme entsprechend EP 0892362, EP 0420261, EP 1511636 B1 und EP 1187728 B1, Cleartext (Negativschrift), Hintergrunddruck, Überdruckung, Laserbeschriftung, Hochprägung usw. entsprechend EP 0892362 und EP 0420261, Moiré-Magnifier, Modulo-Mapping-Feature, Sägezahnstrukturen und Mikrospiegel-Merkmale oder sonstige Merkmale und Produkte entsprechend WO 2005/052650 A2, Seiten 70 bis 74.

Besonders bevorzugt besteht das Sicherheitselement zusätzlich aus einem Echtheitskennzeichen in Form einer Schicht aus flüssigkristallinem Material, insbesondere aus cholesterischem flüssigkristallinem Material, gemäß WO 2006/018171 A2, deren Offenbarung diesbezüglich vollumfänglich in diese Anmeldung aufgenommen wird. Dies bedeutet, dass zusätzlich zu dem Volumenhologramm des Sicherheitselements eine Schicht aus flüssigkristallinem Material erst dann erkennbar ist, wenn das Sicherheitselement vor einen dunklen Hintergrund gebracht wird.

Anhand der nachfolgenden Ausführungsbeispiele und den ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:

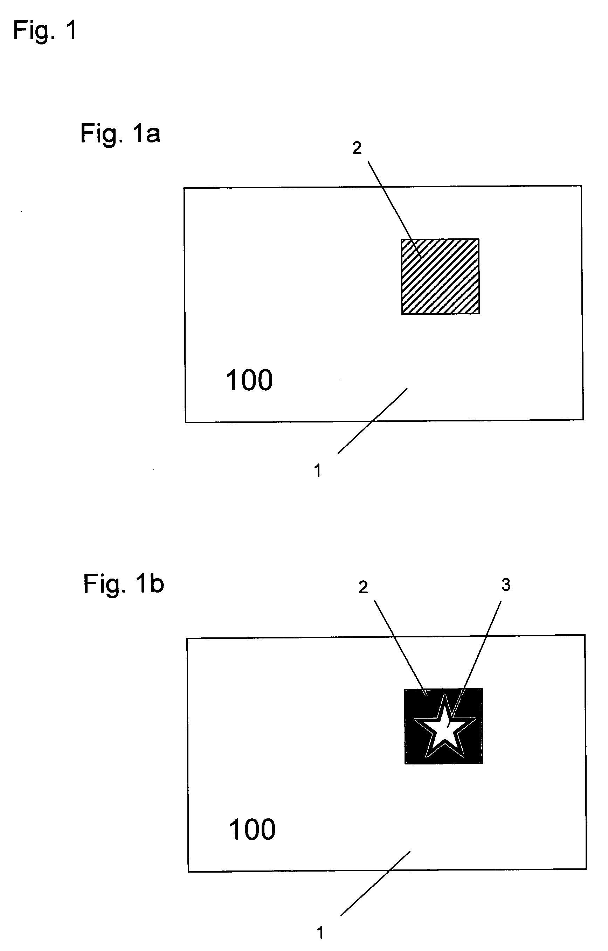

- Fig. 1: ein erfindungsgemäßes Sicherheitsmerkmal in einer Banknote und hierbei in
- Fig.1a: in Durchlicht oder vor einem hellen Hintergrund,
- Fig.1a: in Auflicht vor einem dunklen Hintergrund,
- Fig. 2: Hologramme und hologrammartige Gitterbilder des Standes der Technik und hierbei in
- Fig. 2a: ein Hell-Dunkel-Transmissionshologramm bzw. ein Hell-Dunkel-Transmissionsgitter,
- Fig. 2b: ein Oberflächenstruktur-Hologramm bzw. ein Oberflächenstruktur-Gitter,
- Fig. 2c: ein Volumenhologramm bzw. ein Bragg-Gitter,
- Fig. 3: Verfahren des Standes der Technik zur Massenvervielfältigung von Volumenhologrammen und hierbei in
- Fig. 3a: als Step-and-Repeat-Flächenbelichtung,
- Fig. 3b: als Scan-Belichtung,
- Fig. 4: eine Kopieranordnung mittels eines Transmissionshologramms,
- Fig. 5: ein Ablaufdiagramm für die Erzeugung und Aufbringung eines Volumenhologramms auf eine Banknote,
- Fig. 6: eine Anordnung zur Herstellung und Massenvervielfältigung von Volumengitterbildern und hierbei in
- Fig. 6a: eine Anordnung entsprechend Fig. 3a, jedoch mit einer Anordnung bzw. ein Array aus Mikrospiegeln,
- Fig. 6b: eine Anordnung entsprechend Fig. 4, jedoch mit einer Anordnung bzw. ein Array aus Mikroprismen.

Fig. 1 zeigt ein erfindungsgemäßes Volumenhologramm 2 auf einer Banknote 1. Fig. 1a zeigt hierbei das Volumenhologramm 2 in Durchlicht, d.h. bei einer Beleuchtung des Sicherheitselementes, die von der gegenüberliegenden Seite des Betrachters aus erfolgt, oder vor einem hellen Hintergrund, so dass eine in dem Volumenhologramm 2 versteckte Information 3 nicht zu erkennen ist. Erst wenn das Volumenhologramm 2 gemäß Fig. 1b in Auflicht, d.h. bei einer Beleuchtung des Sicherheitselementes, die von der Seite des Betrachters aus erfolgt, und vor einem dunklen Hintergrund betrachtet wird, nimmt der Betrachter die in dem Volumenhologramm abgespeicherte, versteckte Information 3 wahr, die in Form eine Sterns bzw. allgemein in Form mindestens eines Musters, mindestens eines alphanumerischen Zeichens oder einer graphischen Abbildung ausgebildet ist.

Fig. 2 zeigt verschiedene Hologramme und hologrammartige Gitterbilder des Standes der Technik.

Fig. 2a zeigt hierbei ein Hell-Dunkel-Transmissionshologramm 4 bzw. Hell-Dunkel-Transmissionsgitter, das durch Belichtung eines Silberhalogenid-Films 5 hergestellt wird. Die holographische Schicht ist dünner als die Lichtwellenlänge und enthält gitterartig nebeneinanderliegende hellere und dunklere Bereiche 6.

Fig. 2b zeigt ein Oberflächenstruktur-Hologramm 7 bzw. ein Oberflächenstruktur-Gitter, das durch Belichtung einer Photoresistschicht 11 hergestellt wird, die auf einem Träger 8 aufgebracht ist. Die Belichtung erfolgt mittels elektromagnetischer Strahlung oder mit Elektronenstrahlen. Die Tiefe der erzeugten Strukturen ist geringer als die Lichtwellenlänge, die Berg-Tal-Strukturen haben die Größenordnung der Lichtwellenlänge. Die strukturierte Oberfläche wird verspiegelt, wenn das Hologramm oder Gitterbild in Reflexion angewandt werden soll.

Fig. 2c zeigt ein Volumenhologramm 2 bzw. Bragg-Gitter, das durch Belichtung einer Photopolymerschicht 11 bzw. holographischen Schicht hergestellt wird. Die holographische Schicht ist mehrfach so dick wie die Lichtwellenlänge. In der holographischen Schicht entsteht durch Belichtung und Fixierung eine Abfolge von schräg liegenden Schichtbereichen unterschiedlicher Brechzahl.

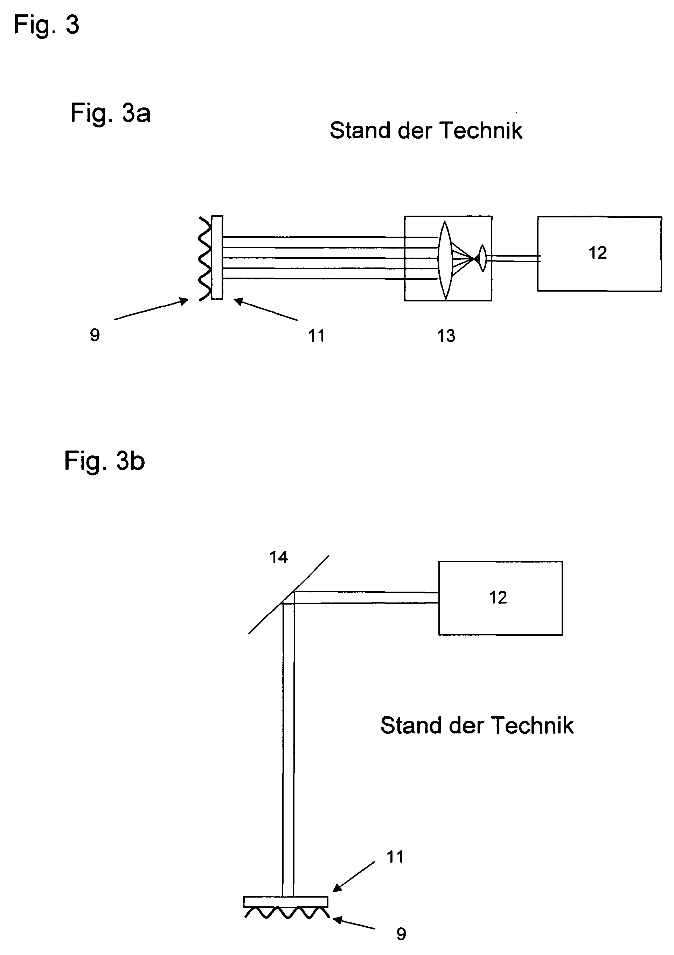

Fig. 3 zeigt schematisch Vorrichtungen zur Massenvervielfältigung des erfindungsgemäßen Volumenhologramms. Hierbei wird insbesondere optisches Kopieren eingesetzt, wobei ein verspiegeltes Oberflächen-Hologramm 9 als "Master" dient.

Fig. 3a zeigt hierbei das Verfahren der Step-and-Repeat-Flächenbelichtung. Der Lichtstrahl eines Lasers 12 wird durch eine Strahlaufweitung 13, die bevorzugt aus zwei hintereinanderliegenden bikonvexen Linsen besteht, aufgeweitet und trifft auf die Photopolymerschicht 11 des Volumenhologramms. Die direkt in die Photopolymerschicht 11 eindringende Strahlung interferiert mit der von dem verspiegelten Oberflächen-Hologramm 9 reflektierten Strahlung und erzeugt dabei das Volumenhologramm in der Photopolymerschicht 11.

Fig. 3b zeigt das alternative Herstellungsverfahren der Scan-Belichtung. Im Gegensatz zur Step-and-Repeat-Flächenbelichtung wird die Strahlung des Lasers durch einen Umlenkspiegel 14 auf die Photopolymerschicht 11 geleitet, wobei der Umlenkspiegel drehbar gelagert ist und die Photopolymerschicht 11 abscannt.

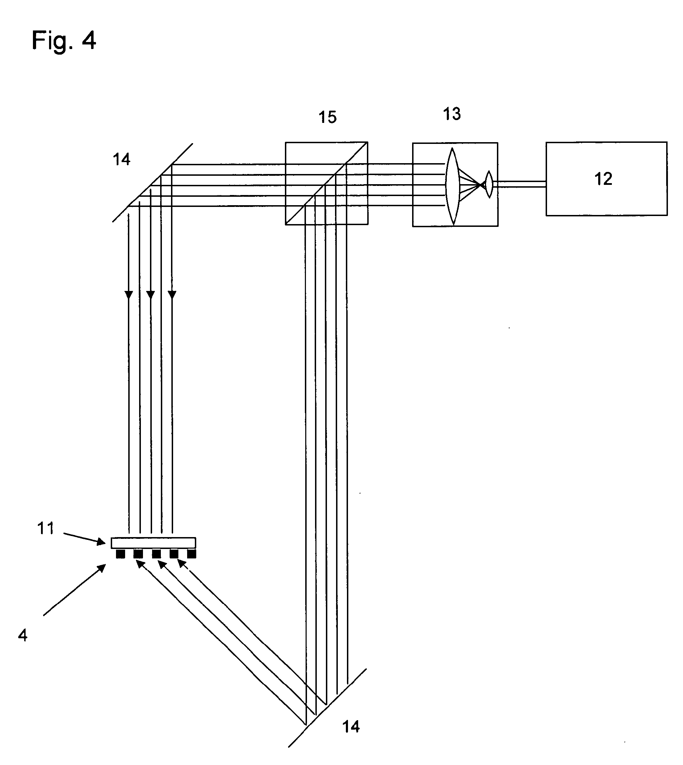

Fig. 4 zeigt eine alternative Anordnung zur Herstellung eines Volumenhologramms, bei der als Hologramm-Master anstatt eines verspiegelten Oberflächen-Hologramms ein Transmissionshologramm 4 verwendet wird. Der Lichtstrahl des Lasers 12 wird durch die Strahlaufweitung 13 aufgeweitet und trifft auf einen Strahlteiler 15, der den Laserstrahl in einen ersten und einen zweiten Laserstrahl aufteilt. Der erste Laserstrahl wird durch einen Umlenkspiegel auf die Oberseite der Photopolymerschicht 11 gelenkt, der zweite Laserstrahl auf die Unterseite der Photopolymerschicht 11, an der sich das Transmissionshologramm 4 befindet. Beide Teilstrahlen interferieren innerhalb der Photopolymerschicht 11 und erzeugen dabei das Volumenhologramm in der Photopolymerschicht 11.

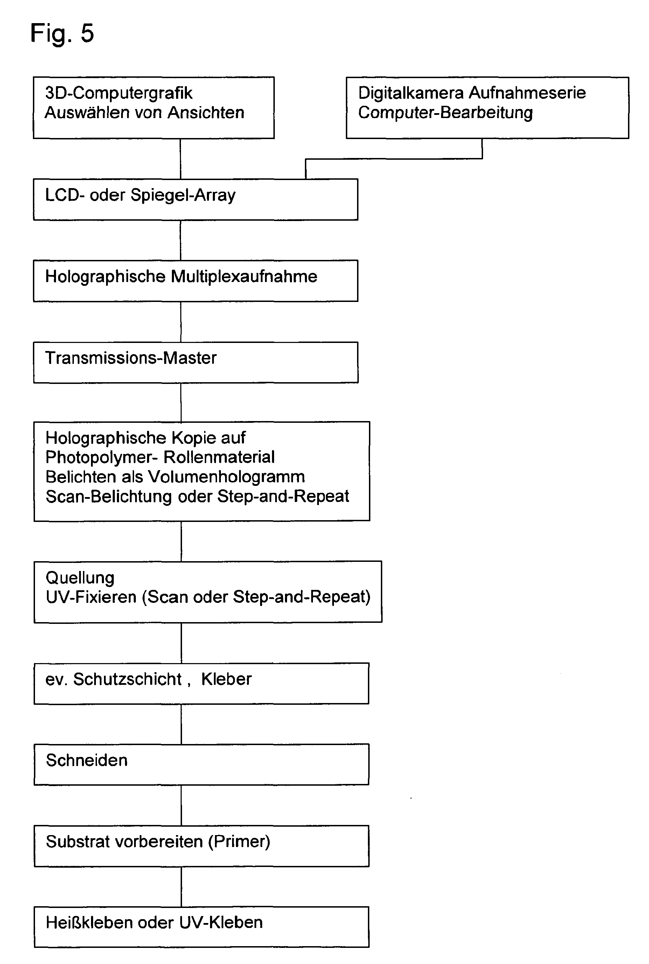

Einen beispielhaften Ablauf für ein Volumenhologramm auf Banknoten zeigt Fig. 5, der vorteilhaft auch bei erfindungsgemäßem Volumenhologramm im Banknotenfenster angewandt werden kann.

Hierbei wird zunächst ein Bild eines abzubildenden Objekts erzeugt, indem entweder das Bild mittels 3D-Computergrafik erzeugt wird, wobei eine Auswahl von verschiedenen Ansichten erfolgt, oder indem mittels einer Digitalkamera eine Serie von Bildern des Objekts aufgenommen und einer Computer-Bearbeitung zugeführt wird.

Anschließend wird mit einem LCD- oder Spiegel-Array eine holographische Multiplexaufnahme und damit ein Transmissions-Master erzeugt.

Die holographische Kopie wird auf Photopolymer-Rollenmaterial übertragen, indem dieses als Volumenhologramm mittels Scan-Belichtung oder Step-and-Repeat-Verfahren belichtet wird. In einem folgenden Arbeitsschritt wird das Photopolymer-Rollenmaterial aufgequollen. Wichtig für die Massenfertigung von Volumenhologrammen ist dabei, dass bei aktuellen Photopolymeren nach dem Aufquellen eine trockene Fixierung durch Nachbelichtung mit UV erfolgt.

Sofern erforderlich oder gewünscht, wird der Photopolymer mit einer Schutz- und/oder Kleberschicht versehen und auf die gewünschten Maße geschnitten.

Das Substrat, auf das der Photopolymer aufgebracht werden soll, wird beispielsweise mittels eines Primers vorbereitet. Abschließend wird der Photopolymer auf das Substrat aufgebracht, bevorzugt durch Heißkleben oder UV-Kleben.

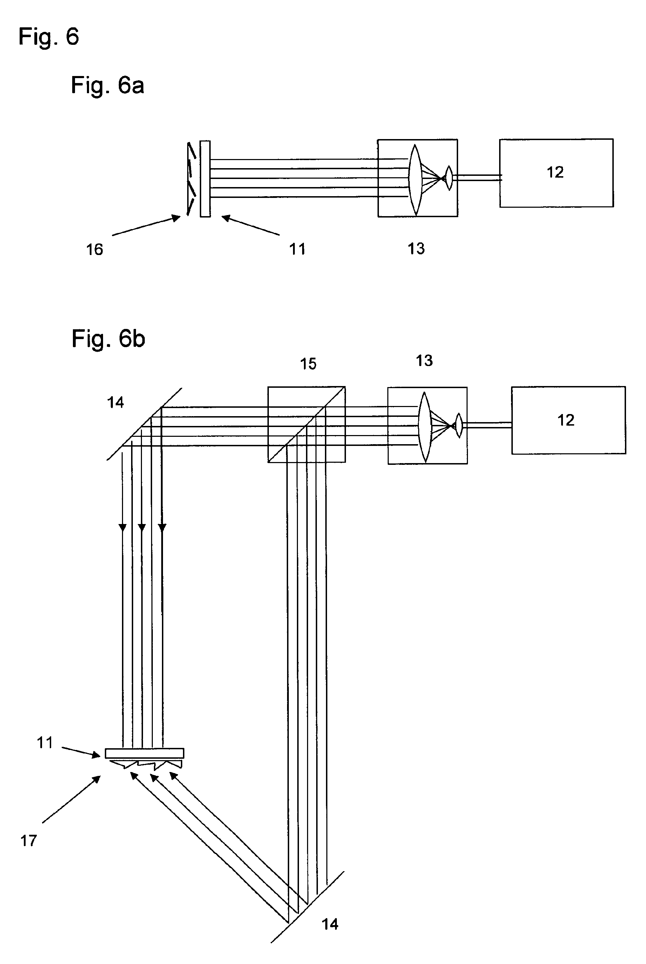

Fig. 6 zeigt eine Anordnung zur Herstellung von Volumengitterbildern anstatt Volumenhologrammen. Fig. 6a entspricht hierbei der Anordnung gemäß Fig. 3a, wobei anstatt eines verspiegelten Oberflächen-Hologramms 9 eine Anordnung bzw. ein Array aus Mikrospiegeln 16 verwendet wird, um das Volumengitterbild zu erzeugen. Fig. 6b entspricht der Anordnung aus Fig. 4, wobei anstatt des Hell-Dunkel-Transmissionshologramms 4 eine Anordnung bzw. ein Array aus Mikroprismen 17 verwendet wird, um das Volumengitterbild zu erzeugen.

### Bezugszeichenliste

- 1: Banknote
- 2: Volumenhologramm
- 3: versteckte Information
- 4: Hell-Dunkel-Transmissionshologramm
- 5: Silberhalogenid-Film
- 6: dunkle Bereiche
- 7: Oberflächenstruktur-Hologramm
- 8: Trägerfolie
- 9: verspiegeltes Oberflächen-Hologramm
- 11: Photopolymerschicht
- 12: Laser
- 13: Strahlaufweitung
- 14: Umlenkspiegel
- 15: Strahlteiler
- 16: Anordnung bzw. Array aus Mikrospiegeln
- 17: Anordnung bzw. Array aus Mikroprismen

## Patentansprüche

1. Sicherheitselement zur Erhöhung des Fälschungsschutzes von Sicherheitsdokumenten, wie Banknoten, Wertpapieren, Ausweisen, Kreditkarten, Debit-Karten oder dergleichen, wobei das Sicherheitselement aus einem Volumenhologramm in einer belichtbaren Schicht besteht, wobei die Dicke der belichtbaren Schicht mindestens eine Wellenlänge der belichtenden bzw. auslesenden elektromagnetischen Strahlung beträgt, wobei in dem Volumenhologramm eine Information in Form mindestens eines Musters, mindestens eines alphanumerischen Zeichens oder einer graphischen Abbildung abgespeichert ist, **dadurch gekennzeichnet, dass** die belichtbare Schicht in mindestens einem ersten Teilbereich mindestens teiltransparent ist und keinen dunklen Hintergrund aufweist, so dass die in dem Volumenhologramm abgespeicherte Information für einen Betrachter erst erkennbar wird, wenn der Betrachter das Volumenhologramm vor einen dunklen Hintergrund hält.

2. Sicherheitselement nach Anspruch 1, **dadurch gekennzeichnet, dass** die belichtbare Schicht aus einem Photopolymer besteht.

3. Sicherheitselement nach mindestens einem der vorigen Ansprüche, da**dadurch gekennzeichnet, dass** das Volumenhologramm aus einer Abfolge von schräg liegenden Schichtbereichen unterschiedlicher Brechzahl besteht.

4. Sicherheitselement nach mindestens einem der vorigen Ansprüche, **dadurch gekennzeichnet, dass** das Sicherheitselement weitere Elemente aufweist, die für einen Betrachter ohne weitere Hilfsmittel erkennbar sind.

5. Sicherheitselement nach mindestens einem der vorigen Ansprüche, **dadurch gekennzeichnet, dass** der erste transluzente Teilbereich ein Fenster in einer Banknote ist.

6. Sicherheitselement nach mindestens einem der vorigen Ansprüche, **dadurch gekennzeichnet, dass** das Sicherheitselement zusätzlich aus einem Echtheitskennzeichen in Form einer Schicht aus flüssigkristallinem Material, insbesondere aus cholesterischem flüssigkristallinem Material, besteht.
